# EUROPEAN PATENT APPLICATION

(11) **EP 4 438 348 A1**
(43) Date of publication of application: **02.10.2024**
(21) Application number: 24163799.0
(22) Date of filing: 15.03.2024
(51) Int. Cl.: B60C 23/04

(54) **AIR PRESSURE MONITORING APPARATUS FOR TIRE**

(30) Priority: 30.03.2023 JP 2023055003
(71) Applicant: Sumitomo Rubber Industries, Ltd., Kobe-shi, Hyogo 651-0072 (JP)
(72) Inventor: MATSUDA, Takuya, Kobe-shi 651-0072 (JP)
(74) Representative: TBK

(57) **Abstract**

An air pressure monitoring apparatus includes an air pressure acquisition unit, a pressure-adjustment determination unit, and a determination unit. The air pressure acquisition unit acquires data on the air pressure in a tire attached to a vehicle. The pressure-adjustment determination unit determines whether the air pressure in the tire has been adjusted. The determination unit determines whether the tire has a slow puncture based on time-course changes in the data on the air pressure. When the pressure-adjustment determination unit has determined that the air pressure in the tire has been adjusted, the determination unit corrects lastly acquired data on the air pressure and determines whether the tire has a slow puncture based on the corrected data on the air pressure.

## Description

### FIELD OF INVENTION

The present invention relates to an air pressure monitoring apparatus for a tire attached to a vehicle, a program, and a method.

### BACKGROUND

For comfort driving of a vehicle, it is important to adjust the air pressures in the tires. This is because if the air pressure falls below a proper value, ride comfort and fuel efficiency may become deteriorated. In view of this, there has been conventionally under study a system for automatically detecting a pressure reduction in a tire (Tire Pressure Monitoring System; TPMS). Information on a pressure reduction in a tire can be used to warn the driver, for example.

Some pressure reduction in a tire may progress more slowly than a usual pressure reduction. This is a phenomenon called "slow puncture" that may occur due to a small flaw in the rubber part of the tire, foreign matter sticking into the rubber part, or imperfect closure of the air valve, for example. Since the slow puncture has a pressure reduction progressing at a relatively slow rate, it may be difficult to detect this phenomenon as a pressure reduction by the conventional TPMS. However, if the vehicle continues to be driven with the slow puncture unattended, a tire burst may occur. Therefore, it is preferred to detect a slow puncture separately from a usual tire pressure reduction and early notify the driver of the slow puncture.

JP 2022-065730A discloses a technique by which it is possible to accurately detect a reduction in the air pressure in a tire even in the case of a "slow leak" in which the rate of the reduction in air pressure is slow. According to the technique disclosed in JP 2022-065730A, tire pressure data is acquired in each constant detection period, and the acquired latest tire pressure data is compared with past tire pressure data earlier by one or more detection periods to calculate the value of a reduction in the air pressure. If the magnitude of the reduction value is equal to or greater than a predetermined threshold value, it is determined that the air pressure in the tire is lowered.

### SUMMARY OF INVENTION

In the configuration of JP 2022-065730A, if adjustment of air pressure in the tire, etc. is performed between the previous detection of air pressure and the current detection of air pressure, the difference between the past tire pressure data and the current tire pressure data may no longer be equal to or larger than the predetermined threshold value, and a slow-rate pressure reduction may not be detected. However, JP 2022-065730A does not consider this matter.

The present invention has an object to provide a technique for accurately detecting a pressure reduction in a tire even if the progress rate of the pressure reduction is slow.

An air pressure monitoring apparatus for a tire according to a first aspect of the present invention includes an air pressure acquisition unit, a pressure-adjustment determination unit, and a determination unit. The air pressure acquisition unit is configured to acquire data on the air pressure in a tire attached to a vehicle. The pressure-adjustment determination unit is configured to determine whether the air pressure in the tire has been adjusted. The determination unit is configured to determine whether the tire has a slow puncture based on time-course changes in the data on the air pressure. When the pressure-adjustment determination unit has determined that the air pressure in the tire has been adjusted, the determination unit corrects lastly acquired data on the air pressure and determines whether the tire has a slow puncture based on the corrected data on the air pressure.

An air pressure monitoring apparatus for a tire according to a second aspect is the air pressure monitoring apparatus for a tire according to the first aspect in which the pressure-adjustment determination unit determines whether the air pressure in the tire has been adjusted based on the lastly acquired data on the air pressure and the data on the air pressure estimated on the assumption that the air pressure in the tire was not adjusted at the timing when the data on the air pressure was lastly acquired or the data on the air pressure that was acquired earlier than the lastly acquired data on the air pressure.

An air pressure monitoring apparatus for a tire according to a third aspect is the air pressure monitoring apparatus for a tire according to the first aspect or the second aspect that further includes a temperature acquisition unit configured to acquire data on the internal temperature of the tire. The air pressure acquisition unit corrects the data on the air pressure based on the data on the internal temperature of the tire.

An air pressure monitoring apparatus for a tire according to a fourth aspect is the air pressure monitoring apparatus for a tire according to any one of the first aspect to the third aspect in which the determination unit determines whether the tire has a slow puncture based on the reduction rate of the air pressure in the tire.

An air pressure monitoring apparatus for a tire according to a fifth aspect is the air pressure monitoring apparatus for a tire according to any one of the first aspect to the fourth aspect that further includes a notification unit is configured such that when the determination unit determines that the tire has a slow puncture, the notification unit notifies the occurrence of the slow puncture.

An air pressure monitoring program for a tire according to a sixth aspect causes one or more computers to execute (1) acquiring data on the air pressure in a tire attached to a vehicle, (2) determining whether the air pressure in the tire has been adjusted, and (3) determining whether the tire has a slow puncture based on time-course changes in the data on the air pressure. (3) determining whether the tire has a slow puncture includes correcting the data on the air pressure when the air pressure in the tire has been determined to be adjusted and determining whether the tire has a slow puncture based on the corrected data on the air pressure.

An air pressure monitoring method for a tire according to a seventh aspect includes (1) acquiring data on the air pressure in a tire attached to a vehicle, (2) determining whether the air pressure in the tire has been adjusted, and (3) determining whether the tire has a slow puncture based on time-course changes in the data on the air pressure. (3) determining whether the tire has a slow puncture includes correcting the data on the air pressure when the air pressure in the tire has been determined to be adjusted and determining whether the tire has a slow puncture based on the corrected data on the air pressure.

According to the present invention, it is possible to accurately detect a pressure reduction in a tire even if the progress rate of the pressure reduction is slow.

### BRIEF DESCRIPTION OF DRAWINGS

FIG. 1 is a schematic diagram illustrating a state in which an air pressure monitoring apparatus according to an embodiment of the present invention is mounted in a vehicle.
FIG. 2 is a block diagram illustrating an electrical configuration of the air pressure monitoring apparatus.
FIG. 3 is a flowchart showing a slow puncture detection process.
FIG. 4 is a graph showing the relationship between internal temperature and air pressure.
FIG. 5 is a graph showing an example of time-series changes in the air pressure that was adjusted.
FIG. 6 is a diagram showing a comparison between the graphs of the air pressure before and after correction on pressure adjustment.

### DETAILED DESCRIPTION OF THE PREFERRED EMBODIMENTS

Hereinafter, an air pressure monitoring apparatus, a program, and a method according to embodiments of the present invention will be described with reference to the drawings.

### <1. Configuration of Air Pressure Monitoring Apparatus>

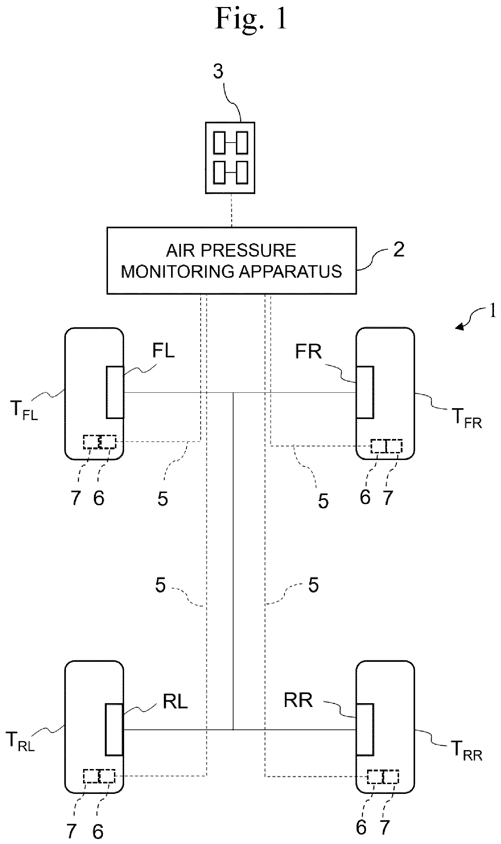

FIG. 1 is a schematic diagram illustrating a state in which an air pressure monitoring apparatus 2 according to the present embodiment is mounted on a vehicle 1. The air pressure monitoring apparatus 2 is implemented as a control unit (in-vehicle computer) mounted in the vehicle 1 and monitors the state of the vehicle 1 during traveling. The vehicle 1 is a four-wheel vehicle and includes a front left wheel (as it is called "wheel hub") FL, a front right wheel FR, a rear left wheel RL, and a rear right wheel RR. The wheels FL, FR, RL, and RR have pneumatic tires T_{FL}, T_{FR}, T_{RL}, and T_{RR} attached thereto, respectively, with rims (as it is called "wheel disks") not illustrated in between. The air pressure monitoring apparatus 2 includes the function of detecting a slow puncture in at least one of these tires T_{FL}, T_{FR}, T_{RL}, and T_{RR}. Upon detection of a slow puncture, the air pressure monitoring apparatus 2 issues a warning about the slow puncture via a warning indicator 3 mounted in the vehicle 1. Details of a flow of such a pressure reduction detection process will be described later.

The pressure reduction states of the tires T_{FL}, T_{FR}, T_{RL}, and T_{RR} are detected based on detection signals from pressure sensors 6 attached to the corresponding tires including rims. Each pressure sensor 6 detects the air pressure in the tire to which the pressure sensor 6 is attached, and outputs sensing data indicating the detection result in predetermined sampling periods. The pressure sensors 6 are connected to the air pressure monitoring apparatus 2 via communication lines 5, and the sensing data output from the pressure sensors 6 moment by moment is transmitted in real time to the air pressure monitoring apparatus 2. Accordingly, the time-series sensing data acquired by the air pressure monitoring apparatus 2 constitutes time-series data on the air pressures in the tires T_{FL}, T_{FR}, T_{RL}, and T_{RR}.

The pressure sensors 6 may be any sensors that can detect the internal pressures in the tires T_{FL}, T_{FR}, T_{RL}, and T_{RR}. The attachment position of each pressure sensor 6 is not limited in particular. Each pressure sensor 6 may be attached inside the tire or may be attached integrally with the air valve of the rim. The attachment position of each pressure sensor 6 can be selected as appropriate in accordance with the type of the sensor as far as the pressure sensor 6 can detect the air pressure in the tire.

In the present embodiment, the tires T_{FL}, T_{FR}, T_{RL}, and T_{RR} including the rims have temperature sensors 7 attached thereto. Each temperature sensor 7 detects the internal temperature in the tire to which the temperature sensor 7 is attached, and outputs sensing data indicating the detected internal temperature in predetermined sampling periods. The temperature sensors 7 are connected to the air pressure monitoring apparatus 2 via the communication lines 5, and the sensing data output from the temperature sensors 7 moment by moment is transmitted in real time to the air pressure monitoring apparatus 2 via the communication lines 5. Accordingly, the time-series sensing data acquired by the air pressure monitoring apparatus 2 constitutes time-series data on the internal temperatures in the tires T_{FL}, T_{FR}, T_{RL}, and T_{RR}. As described later, the data on the internal temperatures of the tires is used to correct the detected air pressures in the tires T_{FL}, T_{FR}, T_{RL}, and T_{RR} by temperature.

The temperature sensors 7 may be any sensors that can detect the internal temperatures of the tires T_{FL}, T_{FR}, T_{RL}, and T_{RR}. The attachment position of each temperature sensor 7 is not limited in particular. Each temperature sensor 7 may be attached inside the tire or may be attached integrally with the pressure sensor 6. The attachment position of each temperature sensor 7 can be selected as appropriate in accordance with the type of the sensor as far as the temperature sensor 7 can detect the internal temperature of the tire.

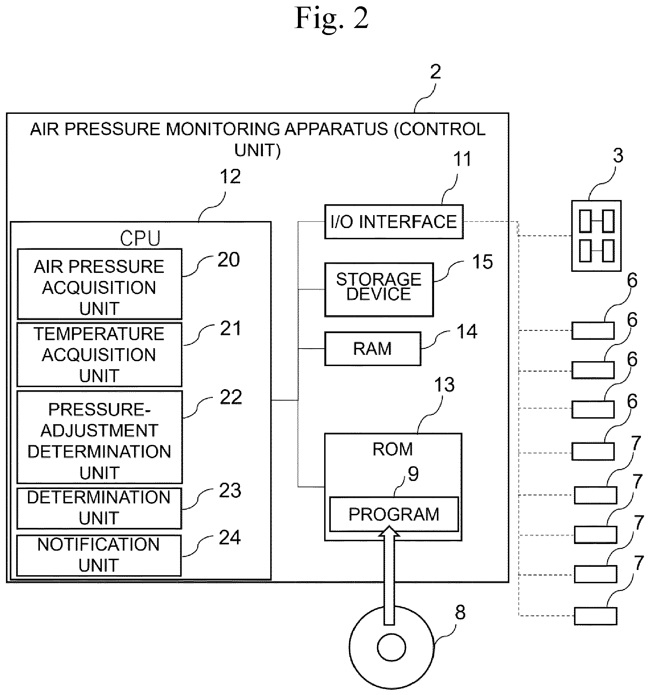

FIG. 2 is a block diagram illustrating an electrical configuration of the air pressure monitoring apparatus 2. As hardware, the air pressure monitoring apparatus 2 is a control unit mounted in the vehicle 1. As illustrated in FIG. 2, the air pressure monitoring apparatus 2 includes an I/O interface 11, a CPU 12, a ROM 13, a RAM 14, and a non-volatile rewritable storage device 15. The I/O interface 11 is a communication device that enables communications with external devices such as the pressure sensors 6, the temperature sensors 7, and the warning indicator 3. The ROM 13 stores a program 9 for controlling the operations of the units in the vehicle 1. The program 9 is written from a storage medium 8 such as a CD-ROM into the ROM 13. The CPU 12 reads the program 9 from the ROM 13 and executes the same to virtually operate as an air pressure acquisition unit 20, a temperature acquisition unit 21, a pressure-adjustment determination unit 22, a determination unit 23, and a notification unit 24. The detailed operations of the units 20 to 24 will be described later. The storage device 15 is constructed of a hard disk, a flash memory, and others. The storage location of the program 9 may not be the ROM 13 but may be the storage device 15. The RAM 14 and the storage device 15 are used as appropriate for arithmetic operations by the CPU 12.

The warning indicator 3 is not limited in particular as far as it can inform the user of the occurrence of a slow puncture. For example, the warning indicator 3 can be implemented in any mode such as lamps corresponding to the four wheels FL, FR, RL, and RR, a liquid crystal display element, a liquid crystal monitor, an organic EL display, or a plasma display. The attachment position of the warning indicator 3 can also be selected as appropriate. However, for example, the warning indicator 3 is preferably provided at a position easy for the driver to see such as atop the instrument panel. If the control unit (air pressure monitoring apparatus 2) is connected to a car navigation system, the monitor for car navigation may be used as the warning indicator 3. If the monitor is used as the warning indicator 3, the warning may be an icon or text information displayed on the monitor.

### <2. Pressure Reduction Detection Process>

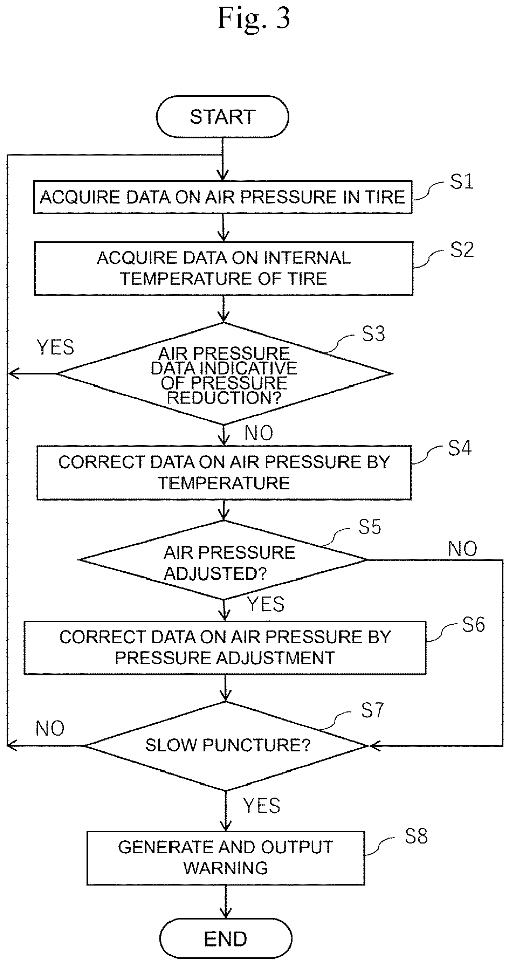

Hereinafter, a slow puncture detection process for detecting a slow puncture in at least one of the tires T_{FL}, T_{FR}, T_{RL}, and T_{RR} will be described with reference to FIG. 3. The slow puncture detection process shown in FIG. 3 is, for example, started or resumed when the ignition switch of the vehicle 1 or electrical system switch is turned on, and is stopped when the switch is turned off. Hereinafter, an operation related to the detection of a slow puncture in the front left tire T_{FL} will be described. However, the same process is performed on the remaining tires T_{FR}, T_{RL}, and T_{RR}.

First, the air pressure acquisition unit 20 acquires sensing data transmitted moment by moment from the pressure sensor 6 attached to the tire T_{FL} as data on the air pressure in the tire T_{FL} (step S1). The sensing data acquired here is received via the I/O interface 11 and saved in the RAM 14 or the storage device 15.

Next, the temperature acquisition unit 21 acquires sensing data transmitted moment by moment from the temperature sensor 7 attached to the tire T_{FL} as data on the internal temperature of the tire T_{FL} (step S2). The sensing data acquired here is received via the I/O interface 11 and saved in the RAM 14 or the storage device 15 in association with the data on the air pressure in the tire T_{FL} acquired at the same time or almost the same time.

Next, the determination unit 23 compares the data on the air pressure acquired in step S1 with a predetermined threshold value Th1, and determines whether the data indicates a pressure reduction in the tire T_{FL} (step S3). If the data on the air pressure acquired in step S1 falls below the threshold value Th1 (or if the data acquired in step S1 is equal to or less than the threshold value Th1) (YES), it is considered that the tire T_{FL} has a general puncture or a pressure reduction, or the like, not a slow puncture. Thus, the subsequent steps are not performed and steps S 1 and S2 are repeated. In addition to or instead of this, the notification unit 24 may generate a warning for notifying a pressure reduction or anomaly in the tire and output the warning via the warning indicator 3 or the like. On the other hand, if the data on the air pressure acquired in step S 1 is equal to or greater than the threshold value Th1 (or if the data acquired in step S1 exceeds the threshold value Th1) (NO), next step S4 is executed.

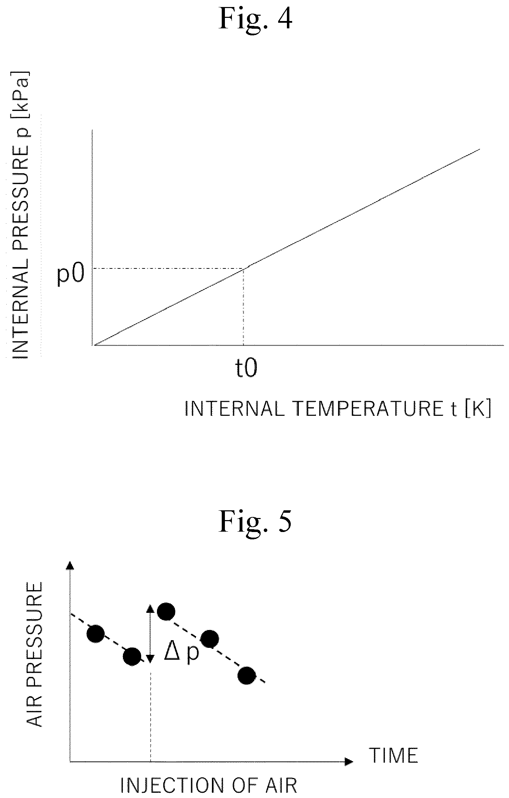

Subsequently, the air pressure acquisition unit 20 corrects the data on the air pressure in the tire T_{FL} based on the data on the internal temperature of the tire T_{FL} acquired at the same time or almost the same time, and converts the same into data on the air pressure where the internal temperature is a reference temperature (step S4). As illustrated in FIG. 4, data on air pressure p [kPa] in the tire is proportional to a tire internal temperature t [K]. Therefore, the data on air pressure p at the internal temperature t can be converted into data on air pressure p0 [kPa] at a reference temperature t0 [K] by an arithmetic operation of p0 = t0·p/t. However, the method for correcting the data on air pressure by temperature is not limited to this and may be another method.

Next, the pressure-adjustment determination unit 22 determines whether the air pressure in the tire T_{FL} has been adjusted (step S5). The adjustment of the air pressure in the tire includes injection of air into the tire and discharge of air from the tire. This determination is made based on the latest data on air pressure that was lastly acquired and corrected by temperature in step S4 and the data on air pressure that was acquired and corrected by temperature in the past. For example, it is assumed that after the data on air pressure was acquired at a certain timing, air is injected into the tire before the data on air pressure is acquired at the next timing. In this case, the relationship between the elapsed time and the air pressure in the tire is as shown in the graph of FIG. 5. As can be seen from FIG. 5, once the air pressure is adjusted, the data on air pressure before and after the adjustment can no longer be treated as continuous data. Accordingly, it is not possible to evaluate time-course changes in the air pressure data as described later. Thus, even if the tire has a slow puncture, the slow puncture is difficult to detect based on the data on air pressure, so that the slow puncture may remain unattended for a long period of time. In order to prevent this situation, the determination in step S5 is performed.

Specifically, the pressure-adjustment determination unit 22 calculates a difference Δp (= p0 - p1) between the latest data on air pressure p0 that was lastly acquired and corrected by temperature in step S4 and the newest data on air pressure p1 that was acquired earlier than the data p0 and corrected by temperature, and compares the absolute value of the difference Δp with a predetermined threshold value Th2. If the absolute value of Δp is equal to or greater than the threshold value Th2 (or if the absolute value of Δp exceeds the threshold value Th2), the pressure-adjustment determination unit 22 determines that the air pressure in the tire was adjusted (YES). In this case, next, step S6 is executed. On the other hand, if the absolute value of Δp is less than the threshold value Th2 (or if the absolute value of Δp is equal to or less than the threshold value Th2), the pressure-adjustment determination unit 22 determines that the air pressure in the tire was not adjusted (NO). In this case, next, step S7 is executed. The threshold value Th2 is saved in advance in the ROM 13 or the storage device 15.

In step S6, the determination unit 23 further corrects by pressure adjustment the latest data on air pressure p0 that was lastly acquired and corrected by temperature in step S4. More specifically, the determination unit 23 subtracts the difference Δp calculated in step S5 from the latest data on air pressure p0 and sets (p0 - Δp) as the data on air pressure after correction by pressure adjustment. Therefore, the "past data on air pressure p1 corrected by temperature" used in step S5 may be data after corrected by pressure adjustment in previous step S6.

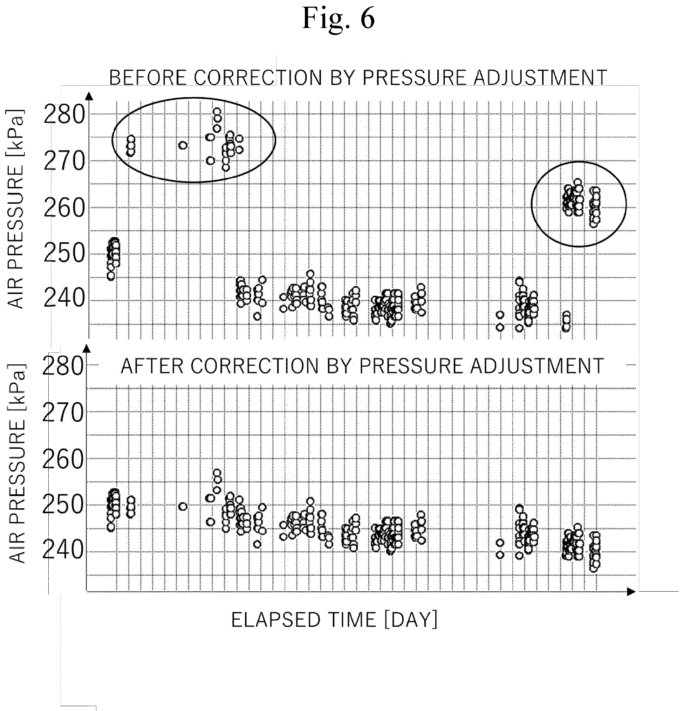

FIG. 6 is a graph showing correction by pressure adjustment in step S6. The upper graph of FIG. 6 is a graph in which air pressure [kPa] in the tire before correction by pressure adjustment is plotted with reference to elapsed time [day]. In the upper graph of FIG. 6, plot points surrounded by circles indicate data on air pressure acquired after air pressure adjustment. When the correction by pressure adjustment in step S6 is made to these plot points, the results are as shown in the lower graph of FIG. 6. It can be seen in the lower graph of FIG. 6 that the plot points corrected by pressure adjustment are shifted to the lower area where other plot points not corrected by pressure adjustment exist in clusters.

Reference will be made again to FIG. 3. In subsequent step S7, the determination unit 23 determines whether the tire T_{FL} has a slow puncture. This determination is made based on time-course changes in the data on air pressure obtained in step S4 or S6. More specifically, the determination unit 23 derives the reduction rate of the air pressure based on a data set of elapsed time and air pressure, and compares the reduction rate with a predetermined threshold value Th3. The reduction rate of the air pressure can also be said to be a slope a (negative value) of regression line of the air pressure that is specified from the data set of elapsed time and air pressure. The threshold value Th3 is a negative value like the slope a and is saved in advance in the ROM 13 or the storage device 15.

In the present embodiment, the latest slope a of the regression line is derived from a sequential calculation using a Kalman filter. In the sequential calculation, four components of a covariance matrix (2 × 2 matrix) indicating the slope a and an intercept b of the latest regression line, and variances of estimated values are saved in the RAM 14 or the storage device 15. The initial values for the sequential calculation are set and saved in advance in the ROM 13 or the storage device 15. In this manner, in the case of deriving the slope a by the sequential calculation, the slope a can be accurately derived based on a lot of past data sets, and the data to be stored is only the values of the latest six variables. Therefore, the necessary capacity of the memory is small and the calculation load is lightened.

If the comparison between the derived slope a and the threshold value Th3 reveals that the slope a is equal to or less than the threshold value Th3 (or that the slope a is less than the threshold value Th3), the determination unit 23 determines that the tire T_{FL} has a slow puncture (YES). In this case, next, step S8 is executed. On the other hand, if the slope a exceeds the threshold value Th3 (or if the slope a is equal to or greater than the threshold value Th3), the determination unit 23 determines that the tire T_{FL} has no slow puncture (NO). In this case, steps S1 to S7 are executed again. However, steps S1 to S7 may be executed once a day. Thus, the slope a and the intercept b calculated by the sequential calculation are saved in the storage device 15.

In step S8, the notification unit 24 generates a warning for notifying the driver that the tire T_{FL} has a slow puncture, and outputs the same via the warning indicator 3 or the like. The warning may be characters indicating the slow puncture of the tire T_{FL} or may be a predetermined icon or graphics. The notification unit 24 may also warn the driver about the slow puncture, for example, by illuminating a lamp of the warning indicator 3 corresponding to the tire T_{FL}. In addition to or instead of this, the notification unit 24 may generate the warning in a mode of voice or buzzer sound and output the same from the speaker or the like of the vehicle 1.

### <3. Features>

In the air pressure monitoring apparatus 2 according to the above-described embodiment, it is determined whether the air pressure in the tire was adjusted before the acquisition of the latest data on air pressure, and the increase or decrease in the air pressure by the air pressure adjustment is offset from the latest data on air pressure. Accordingly, the influence of the temporary increase or decrease in the air pressure is canceled from the data on air pressure, and it is possible to accurately detect a slow puncture that would be difficult to detect by general algorithms.

In the air pressure monitoring apparatus 2 according to the above-described embodiment, the data on air pressure is corrected by temperature to cancel the influence of a temperature difference. Accordingly, it is possible to grasp time-course changes in the air pressure more accurately and detect a slow puncture more accurately.

### <4. Modification Examples>

An embodiment of the present invention has been described above. However, the present invention is not limited to the above-described embodiment and can be modified in various manners insofar as not deviating from the gist of the present invention. In addition, the substances of the following modification examples can be combined as appropriate.
(1) In step S5 of the above-described embodiment, it is determined whether the air pressure was adjusted based on the latest data on air pressure and the data on air pressure that was acquired at the previous timing and corrected by temperature. However, the past data on air pressure for use in the determination may be an average value, a weighted average value, moving average value, or the like of a plurality of past air pressure data. In addition, the determination on whether the air pressure was adjusted may be made based on the latest data on air pressure and the data on air pressure that is estimated on the assumption that the air pressure was not adjusted. The data on air pressure that is estimated on the assumption that the air pressure was not adjusted may be an estimated value of air pressure based on an AR model at the timing at which the data on air pressure was lastly acquired (including substantially the same timing), or the like, for example.
(2) Either of steps S1 and S2 may be performed earlier. The determination in step S3 may be made after step S4 based on the data on air pressure corrected by temperature. The correction by temperature in step S4 may be omitted. In this case, the vehicle 1 may not be equipped with the temperature sensors 7.
(3) The pressure-adjustment determination unit 22 in the above-described embodiment determines whether the air pressure has been adjusted based on the latest data on air pressure and the past data on air pressure. However, the pressure-adjustment determination unit 22 may determine that the air pressure was adjusted if the pressure-adjustment determination unit 22 detects an initializing operation that was executed by the user at the time of pressure adjustment, rotation, replacement, or the like of the tire. The pressure-adjustment determination unit 22 may determine whether the air pressure was adjusted if the pressure-adjustment determination unit 22 detects the opening or closing of the valve core of air valve in the rim.
(4) The air pressure monitoring apparatus 2 may include one or more computers that implement the functions of the air pressure acquisition unit 20, the temperature acquisition unit 21, the pressure-adjustment determination unit 22, the determination unit 23, and the notification unit 24. At least some of steps S1 to S8 may be executed by different computers. The one or more computers included in the air pressure monitoring apparatus 2 may be either in-vehicle computers or computers outside the vehicle 1, or may be both of them. That is, the air pressure monitoring apparatus 2 may not be necessarily mounted in the vehicle 1. Examples of the computers outside the vehicle 1 include computers belonging to the pressure sensors 6 the temperature sensors 7, or the like, server computers communicably connected to the pressure sensors 6 or the temperature sensors 7, and others.
(5) In the above-described embodiment, the sequential calculation using a Kalman filter is performed at the time of derivation of the slope a. However, the method for deriving the slope a is not limited to this but can be changed as appropriate. For example, the slope a can be derived by applying the least squares method to the data sets of elapsed time and air pressure for a predetermined number of past days.

### LIST OF REFERENCE NUMERALS

- 1: Vehicle
- 2: Air pressure monitoring apparatus
- 20: Air pressure acquisition unit
- 21: Temperature acquisition unit
- 22: Pressure-adjustment determination unit
- 23: Determination unit
An air pressure monitoring apparatus includes an air pressure acquisition unit, a pressure-adjustment determination unit, and a determination unit. The air pressure acquisition unit acquires data on the air pressure in a tire attached to a vehicle. The pressure-adjustment determination unit determines whether the air pressure in the tire has been adjusted. The determination unit determines whether the tire has a slow puncture based on time-course changes in the data on the air pressure. When the pressure-adjustment determination unit has determined that the air pressure in the tire has been adjusted, the determination unit corrects lastly acquired data on the air pressure and determines whether the tire has a slow puncture based on the corrected data on the air pressure.

## Claims

1. An air pressure monitoring apparatus (2) for a tire (T_{FL}, T_{FR}, T_{RL}, T_{RR}) comprising:
an air pressure acquisition unit (20) configured to acquire data on an air pressure in a tire (T_{FL}, T_{FR}, T_{RL}, T_{RR}) attached to a vehicle (1);
a pressure-adjustment determination unit (22) configured to determine whether the air pressure in the tire (T_{FL}, T_{FR}, T_{RL}, T_{RR}) has been adjusted; and
a determination unit (23) configured to determine whether the tire (T_{FL}, T_{FR}, T_{RL}, T_{RR}) has a slow puncture based on a time-course change in the data on the air pressure,
wherein when the pressure-adjustment determination unit (22) has determined that the air pressure in the tire (T_{FL}, T_{FR}, T_{RL}, T_{RR}) has been adjusted, the determination unit (23) corrects lastly acquired data on the air pressure and determines whether the tire (T_{FL}, T_{FR}, T_{RL}, T_{RR}) has a slow puncture based on the corrected data on the air pressure.

2. The air pressure monitoring apparatus (2) for a tire (T_{FL}, T_{FR}, T_{RL}, T_{RR}) according to claim 1,
wherein the pressure-adjustment determination unit (22) determines whether the air pressure in the tire (T_{FL}, T_{FR}, T_{RL}, T_{RR}) has been adjusted based on the lastly acquired data on the air pressure and the data on the air pressure that was acquired earlier than the lastly acquired data on the air pressure or the data on the air pressure estimated on an assumption that the air pressure in the tire (T_{FL}, T_{FR}, T_{RL}, T_{RR}) was not adjusted at a timing when the data on the air pressure was lastly acquired.

3. The air pressure monitoring apparatus (2) for a tire (T_{FL}, T_{FR}, T_{RL}, T_{RR}) according to claim 1 or 2, further comprising:
a temperature acquisition unit (21) configured to acquire data on an internal temperature of the tire (T_{FL}, T_{FR}, T_{RL}, T_{RR}),
wherein the air pressure acquisition unit (20) corrects the data on the air pressure based on the data on the internal temperature of the tire (T_{FL}, T_{FR}, T_{RL}, T_{RR}).

4. The air pressure monitoring apparatus (2) for a tire (T_{FL}, T_{FR}, T_{RL}, T_{RR}) according to any one of claims 1 to 3,
wherein the determination unit (23) determines whether the tire (T_{FL}, T_{FR}, T_{RL}, T_{RR}) has a slow puncture based on a reduction rate of the air pressure in the tire (T_{FL}, T_{FR}, T_{RL}, T_{RR}).

5. The air pressure monitoring apparatus (2) for a tire (T_{FL}, T_{FR}, T_{RL}, T_{RR}) according to any one of claims 1 to 4, further comprising:
a notification unit (24) configured such that when the determination unit (23) has determined that the tire (T_{FL}, T_{FR}, T_{RL}, T_{RR}) has a slow puncture, the notification unit (24) notifies occurrence of the slow puncture.

6. An air pressure monitoring program for a tire, causing one or more computers to execute:
acquiring data on an air pressure in a tire attached to a vehicle;
determining whether the air pressure in the tire has been adjusted; and
determining whether the tire has a slow puncture based on a time-course change in the data on the air pressure,
wherein the determining whether the tire has a slow puncture includes:
correcting lastly acquired data on the air pressure when the air pressure in the tire has been determined to be adjusted; and
determining whether the tire has a slow puncture based on the corrected data on the air pressure.

7. An air pressure monitoring method for a tire, comprising:
acquiring data on an air pressure in a tire attached to a vehicle;
determining whether the air pressure in the tire has been adjusted; and
determining whether the tire has a slow puncture based on a time-course change in the air pressure,
wherein the determining whether the tire has a slow puncture includes:
correcting the data on the air pressure when the air pressure in the tire has been determined to be adjusted; and
determining whether the tire has a slow puncture based on the corrected data on the air pressure.
